# EUROPEAN PATENT APPLICATION

(11) **EP 1 640 255 A1**
(43) Date of publication of application: **29.03.2006**
(21) Application number: 04726187.0
(22) Date of filing: 07.04.2004
(51) Int. Cl.: B62D 61/10, B62D 53/00, B60K 17/36

(54) **ARTICULATED VEHICLE**

(30) Priority: 08.04.2003 ES 200300830
(71) Applicant: Benet Soler, Gabriel, 08022 Barcelona (ES); Universitat Politecnica de Catalunya, 08028 Barcelona (ES)
(72) Inventor: BENET SOLER, Gabriel, E-08022 Barcelona (ES); RIBA ROMEVA, Carles, E-08970 Sant Joan Despi (ES); ESQUERRA I LLUCIA, Joan de la Creu, E-08017 Barcelona (ES)
(74) Representative: Gislon, Gabriele
(86) International application number: PCT/ES2004/000159
(87) International publication number: WO 2004/089730

(57) **Abstract**

This articulated vehicle comprises a chassis (1) having a first end (1 a) having two first and separate, castoring, rolling members (3) fitted to it, and a second end (1b) having a fixedly oriented rolling member (4) fitted to it, this latter rolling member being arranged in the vehicle's travelling direction; and a frame (2) having a first end (2a) or a region being located in the vicinity of this latter, said end or region being linked to said chassis (1) by means of at least one articulation (12) providing a swivelling axis being substantially parallel to a ground and perpendicular to the vehicle's travelling direction, and a second end (2b) having two first and separate, castoring, rolling members (5) fitted to it. Said fixedly oriented rolling member (4) has a rolling surface being adapted to provide a high adhesion in relation to the conditions of said ground for which the vehicle is intended.

## Description

### Scope of the invention

This invention concerns an articulated vehicle and, more specifically, an articulated vehicle in accordance with a rotating axis parallel to the ground and perpendicular to the direction of travel of the vehicle and fitted with rolling elements in three sections of its length.

The articulated vehicle of this invention has application as transport for goods, persons or animals or as a mobile platform for the installation of maintenance structures and/or apparatus in fields, such as industry, agriculture, health, the hotel industry and sports.

### Background techniques

Vehicles, especially carts and trolleys, fitted with several sufficiently separated, self-steering wheels are very well-known and very widely used. Vehicles of this type are generally pushed in a longitudinal direction by one or more operators and steering is carried out by pushing sideways on one end of the trolley. Vehicles of this type are both practical and versatile, but have several inconveniences. On the one hand, since all wheels are self-steerable, the vehicle is difficult to guide following a desired path and often shows a tendency to drift to one side, for example, on a ground inclined in a direction transversal to that of vehicle travel. On the other hand, because the self-steerable wheels are not motorised, vehicle drag, especially when loaded and/or travelling up a slope is very arduous.

Spanish patent application No 200100546 form the same applicant describes motorisation equipment for vehicles of the type described above. The mentioned motorisation equipment is designed as a module that can be incorporated into any trolley with self-steering wheels and consists of a support on which is installed a wheel connected to an electric motor via a transmission. The mentioned support can be installed in a tilting fashion and in a preferably central position, on the lower part of the trolley chassis with self-steerable wheels. The driven wheel has a fixed orientation and, in virtue of the mentioned tilting mounting, makes permanent contact with the ground in spite any irregularities that might exist in the same. Advantageously, the electric motor is fed from a battery installed on the cited support, preferably at the end of the same distal from its point of articulation, in order to cooperate with its weight in the adherence of the drive wheel with respect to the ground. In addition, a spring fitted between the tilting support and the trolley chassis causes part of the weight of the load on the trolley to cooperate in the mentioned adherence of the drive wheel with respect to the ground.

The previous arrangement, although it is completely efficient as a drive accessory for an existing trolley with self-steering wheels, it can be improved when a new vehicle is to be provided and fitted with some means of aiding the guidance, either by a brake or drive. For example, in the motorisation equipment described in the cited patent application No 200100546, the weight of the load arranged on the trolley is mainly on the self-steering wheels and is not transmitted, or is to a lesser extent, to the drive wheel, so that on occasions, the normal force of the drive wheel with respect to the ground is insufficient to guarantee adherence.

The objective of this invention is to provide a vehicle fitted with several steerable and/or self-steerable rolling elements, with at least one steering rolling element with fixed orientation in the vehicle's direction of travel, and a chassis and frame arrangement that ensures a significant part of the load weight lies over the cited fixed orientation rolling element in order to cooperate in its adherence with respect to the ground.

Another advantage of the vehicle of this invention is that, in the case of exceeding a certain lateral inclination of the vehicle, only a partial overturning of the same will occur because it has a stable lateral inclined position, as will be explained later.

### Brief description of the invention

The previous and other objective are achieved in accordance with this invention, providing an articulated vehicle that consists of a chassis and a frame fitted with rolling elements and mutually articulated. The mentioned chassis has a first end on which at least the first two steerable rolling elements are separately installed, and a second end on which at least one steerable rolling element is installed, with a fixed orientation set in the vehicle's direction of travel. The cited frame has a corresponding first end or a zone close to the same, which is coupled to the chassis by means of at least one articulation in accordance with a rotating axis parallel to the ground and perpendicular to the vehicle's direction of travel, and a second end on which at least two second separate steerable rolling elements are installed. The mentioned second end of the frame is in a position that is distal with respect to the cited first end of the chassis. Moreover, at least the said fixed orientation rolling element has a rolling surface that is suitable for providing a high level of adherence in relation to the ground conditions over which the vehicle has to travel.

In virtue of the previous construction, a significant part of the weight of a load distributed over the chassis and/or frame, together with the weight of the actual chassis and frame is applied to the mentioned fixed orientation rolling element, which has the cited high-adherence rolling surface. This characteristic has several uses. On the one hand, the fixed orientation rolling element, which is preferably installed in a substantially central position, acts as an aid to steering when the other rolling elements are self-steerable, preventing lateral drift of the vehicle over surfaces that are inclined in a transverse direction to that of travel. Including when the rolling elements of one end are controllable and those at the other end are self-steering, the fixed orientation of the central rolling element prevents any lateral drift of the end of the vehicle on which the rolling elements are self-steering. In addition, the fixed orientation rolling element does impede or hinder changes in direction of the vehicle since the vehicle is able to pivot around the point of contact of the fixed orientation rolling element with the ground at the same time as the other rolling elements self-orientate themselves in the required direction.

On the other hand, the fixed orientation rolling element, in virtue of its good adherence with respect to the ground, can be fitted with some means of braking, connected to a selective operating device for the said means of braking, which increases the control possibilities of the vehicle. This simple brake function can have application, for example, in the case where a vehicle pushed by a person has to move downhill in a loaded condition and uphill in an unloaded condition. The means of braking can be of any known type, for example, friction brake pads or hydraulic brake elements etc.

Finally, the fixed orientation rolling element can act as a rolling drive element by installing a drive motor operationally connected to power the said rolling drive element. In this case, the vehicle preferably includes a power supply that is connected and arranged to provide power to the said drive motor, together with control devices connected and arranged to remotely control the drive motor. The drive motor can be of several types, such as a compressed air motor fed from one or more replaceable or rechargeable compressed air bottles, installed on the chassis or frame, or a petrol engine fed from a fuel tank installed on the chassis or frame. In accordance with an embodiment example, the drive motor is an electric motor installed on the chassis and connected to the driven rolling element, preferably be means of a drive transmission that could eventually include one or more reduction stages. Advantageously, the said drive motor and said drive transmission are located in a compact arrangement adjacent to the drive rolling element. One or more batteries, preferably rechargeable, can be installed on the chassis and connected to supply electricity to the drive motor via an electric circuit that includes the mentioned control devices. These control devices are located in an easily accessible location and may include several functions, among which, for example, the Start/Stop control, the direction of travel changeover, speed regulation and emergency stop etc. In addition, the drive motor, whatever the type, when operating without load or when switched off could provide the mentioned means of braking.

With reference to the vehicle structure, in accordance with an embodiment example, the mentioned articulation is located in an intermediate zone of the chassis, between the first and second ends of the same, and in a zone close to the first end of the frame, and a portion of the frame adjacent to the first end substantially covers all the chassis. In this case, the frame can be used as a platform for carrying cargo, persons or animals, or for the installation of maintenance structures and/or apparatus. In accordance with another embodiment example, the articulation is located between the second end of the chassis and the first end of the frame, on which case, both the chassis and the frame can be employed as platforms for carrying cargo, persons or animals, or for the installation of maintenance structures and/or apparatus.

In summary, in its simplest embodiment mode, this invention provides a vehicle pushed by persons that is extraordinarily simple and light, fitted with self-steerable rolling elements, at least at its ends and at least one fixed orientation rolling element, located in a central position. The vehicle's articulated construction ensures that the same is capable of adapting to any ground irregularities (within certain limits), with the fixed orientation rolling element and at least three of the steerable rolling elements at the ends remaining in permanent contact with the ground, and where at least part of the load arranged on the vehicle lies over the central fixed orientation rolling element cooperating in the adherence of the same with respect to the ground. This central fixed orientation rolling element, with good adherence to the ground, provides assistance in steering, prevents lateral drift and forms a pivoting point about which the vehicle rotates during changes in direction. In addition, this fixed orientation rolling element can be fitted with some means of braking and/or means of drive to concert the vehicle into a self-propelled vehicle, and not represent any impedance for incorporating some means of control for governing the direction of at least one of the steerable wheels, so that in its more complex embodiment mode, this invention provides a self-propelled, controllable articulated vehicle.

### A brief description of the figures

The previous and other characteristics and advantages will become more evident from the following detailed description of some embodiment examples with reference to the accompanying drawings, in which:
Fig. 1 is a perspective view of the articulated vehicle, in accordance with an embodiment example of this invention, in which the front frame is arranged to carry the entire load.
Figs. 2, 3 and 4 are lateral elevation, plan and front elevation views, respectively, of the vehicle in Fig. 1;
Fig. 5 is a partial, enlarged view of the vehicle drive unit;
Figs. 6 and 7 are lateral elevation views that show the vehicle in limit positions with respect to various types of ground irregularities.
Fig. 8 is a plan view of another embodiment example of the articulated vehicle of this invention that incorporates a steering device to govern the steering of the two steerable wheels of a first end of the vehicle, with the governed wheels arranged for a straight path of travel.
Fig. 9 is a plan view of the vehicle in Fig. 8 with the governed wheels arranged for a curved path of travel.
Fig. 10 is a plan view of another embodiment example of the articulated vehicle of this invention that incorporates a steering device to govern the steering of only one steerable wheel of a first end of the vehicle, with the governed wheels arranged for a curved path of travel.
Fig. 11 is a lateral elevation view of another embodiment example of the articulated vehicle of the invention, in which both the rear chassis and front frame are arranged to carry part of the load; and
Fig. 12 is a lateral elevation view of a vehicle similar to that shown in the embodiment example in Figs. 1 to 7, in which a lift platform is installed on the front frame.

### Detailed descriptions of some embodiment examples

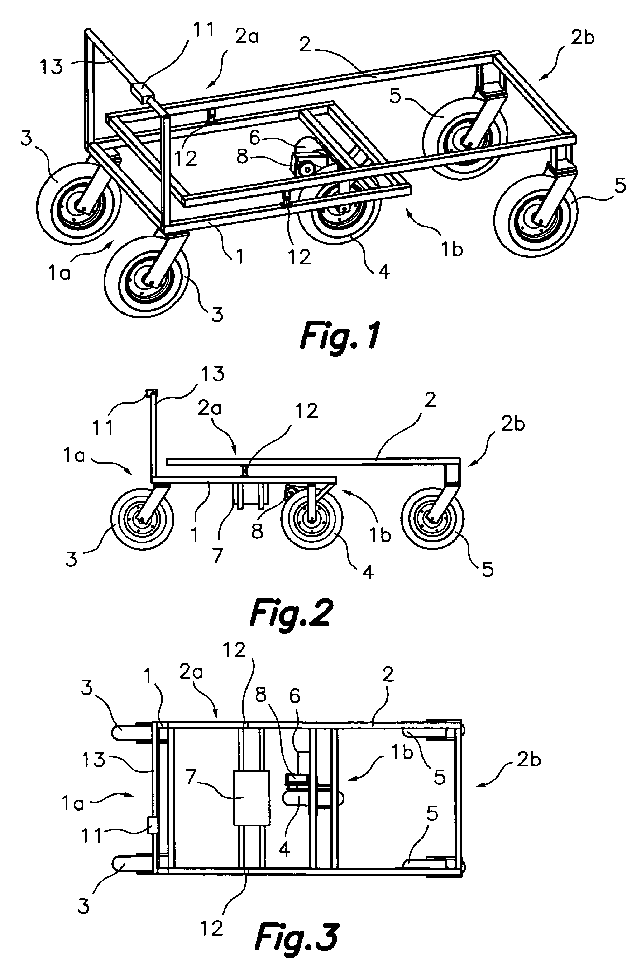

Referring to Figs. 1 to 4, in which the articulated vehicle of this invention can be seen. The vehicle structure comprises a chassis 1 and a frame 2 that are articulated by means of a pair of aligned articulations 12, which provide a rotating axis, parallel to the ground and perpendicular to the vehicle's direction of travel. The chassis 1 has a first end 1a on which at least the first two steerable wheels 3 are separately installed, and a second end 1b on which at least one fixed orientation wheel 4 is installed, set in the vehicle's direction of travel. In turn, the frame 2 has a first end 2a and a second end 2b on which at least two second steerable wheels 5 are separately installed. In the embodiment example of Fig. 1, the cited articulation 12 is arranged in a zone next to the first end 2a of the frame 2 and in an intermediate position between the first and second ends 1a and 1 b of chassis 1, with the said second end 2b of the frame 2 in a position distal from the cited first end 1a of chassis 1. The single fixed orientation wheel 4 is arranged in an intermediate position of chassis 1 in a direction transversal to that of vehicle travel, and is in an intermediate longitudinal position between the first and second rolling elements 3, 5, respectively located at a first end 1a of chassis 1 and second end 2b of frame 2. Preferably the vehicle incorporates a handle 13, at least at the first end 1 a of chassis 1.

The fixed orientation wheel 4 has a suitable rolling surface to provide a high adherence in relation to the ground conditions for which the trolley is designed. For example, in an agricultural application, the fixed orientation wheel 4 can be fitted with a pneumatic cover with a tread to ensure adherence to grounds covered with soil, rocks, plants and mud etc. On the other hand, in applications, such as hospitals and warehouses, the fixed orientation wheel 4 can be fitted with elastomer rim and a smooth rolling tread to ensure adherence to smooth firm floors.

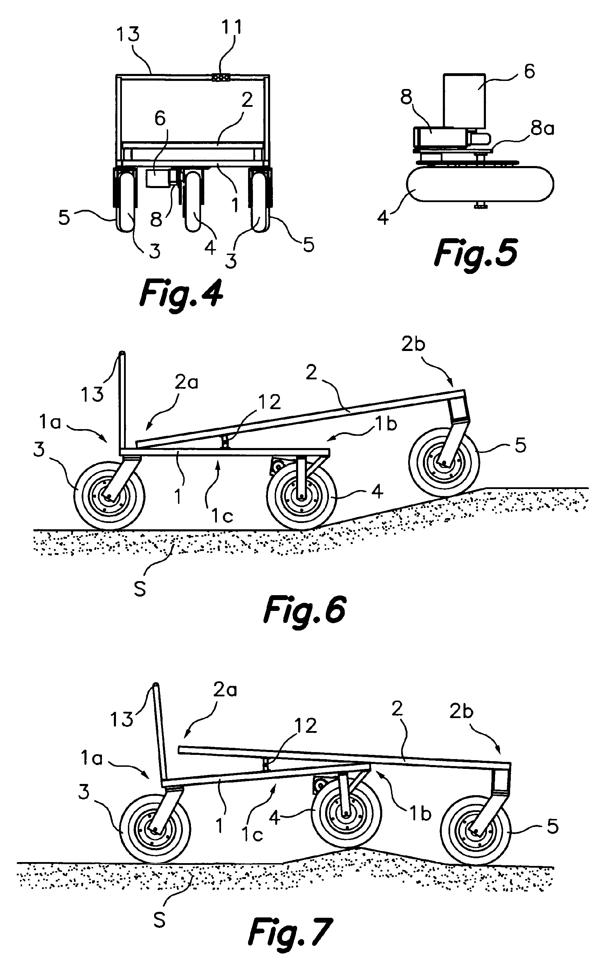

The electric drive motor 6 is installed on the chassis 1 and connected to the drive wheel 4 by means of a movement transmission 8, which usually includes one or more reduction stages. Advantageously, the electric motor 6 and the said movement transmission 8 are located adjacent to the drive wheel 4 in order to form a compact design drive unit and to cooperate with the drive unit in the adherence of the drive wheel 4. Fig. 5 shows the drive unit coupled to the fixed orientation drive wheel 4, where the electric motor 6 is coupled to a gearbox 8, the output of which is connected to axle of the wheel 4 by means of a flexible drive element, such as a chain 8a, belt or toothed belt, mounted on the corresponding pinions or pulleys.

The drive motor 6 is powered by electricity supplied by at least one battery 7 (not shown in Figs. 1 and 4 for better clarity) installed on the chassis 1, although it could equally be installed on frame 2. The advantage here is that, in one case or the other, the battery is located in a position so that at least one part of the battery 7 weight lies over the fixed orientation wheel 4 in order to cooperate in its adherence with the ground. The battery 7 is preferably rechargeable and is connected to the drive motor 6 by means of an electric circuit that includes some control devices 11, which are typically devices for selective control of various functions, such as switching the motor on and off, forward or reverse directions of vehicle travel, speed and emergency stop etc. For ease of access, the said control devices can be mounted on the handle.

The vehicle in accordance with this invention, in virtue of the good adherence of the fixed orientation wheel 4 described above, can include some means of braking associated with the said fixed orientation wheel 4, together with some means of selectively operating the said means of braking, independently of whether the vehicle incorporates a drive motor or not. The said means of braking may be of various types, typically including some friction brake elements, whether mechanical friction, such as brake pads and disc or drum, or hydraulic brake devices. In the case in which the vehicle incorporates a drive motor 6, as in the illustrated embodiment examples, the said means of braking can be fully or partially provided by the said drive motor 6.

As mentioned above, in the embodiment examples shown in Figs. 1 to 4, the articulation 12 is located in an intermediate zone 1 c between the said first and second ends 1 a and 1b of the chassis 1 and a portion of the said frame adjacent to the first end 2a, substantially covers the entire chassis 1, with the frame 2 able to act as a platform for transporting cargo, persons or animals, or for the installation of maintenance structures or apparatus, such as cranes, lift platforms and extending arms etc.

Figs. 6 and 7 show the vehicle of Figs. 1 to 4 in two different positions determined by the irregularities in the ground S. In the position of Fig. 6, one of the second orientable wheels 5 is higher than the other wheel 3, 4 because of an irregularity in the ground, whereas in the example illustrated in Fig. 7, it is the central fixed orientation wheel 4 that is higher than the other wheels 3, 5. In both cases, it is possible that, depending on the type of irregularity, some of the other wheels will be in the air, but the special design of this invention guarantees that, in any position, at least the central fixed orientation wheel 4 and three of the first and second orientable wheels make contact with the ground S, providing excellent drive stability. The vehicle can be made suitable for the type of ground irregularity by the design of the relative dimensions of the chassis 1 and the frame 2 and the position of the articulation 12 between the two since the maximum acceptable irregularity limits are established by the contact of the first end 1a of the chassis 1 with the first end 2a of the frame 2 (Fig. 6) and by contact of the second end 1b of the chassis 1 with an intermediate zone of the frame 2 (Fig. 7). For this reason, the articulation is arranged in a manner that maintains the chassis 1 and the frame 2 separated by a certain distance, at the point where the same is located. By means of a variation in the position of the articulation 12 between the chassis 1 and the frame 2 during the design phase, the load distribution can be determined over the first and second steerable wheels 3, 5 and the fixed orientation wheel 4.

Another advantage of the vehicle of this invention is that in the case of exceeding a certain lateral inclination of the vehicle, only partial overturning will occur of the same since it has a stable laterally inclined position in which a first steerable wheel 3 makes contact with the ground, together with a second steerable wheel 5 on the same side and the fixed orientation wheel 4, while the first end 1 a of the chassis 1 makes contact with the first end 2a of frame 2. A vehicle with only three wheels would not require the central fixed-orientation wheel, but it would be mush more liable to tip over and, in such a situation, it would tip over completely

In the embodiment example illustrated in Figs. 1 to 4, the first and second steerable wheels 3, 5 are all independent self-steering wheels, so that the vehicle can be governed by applying pressure to one of its ends in a direction that is transversal to that of vehicle travel. However, the articulated vehicle of this invention can easily be fitted with some means of control.

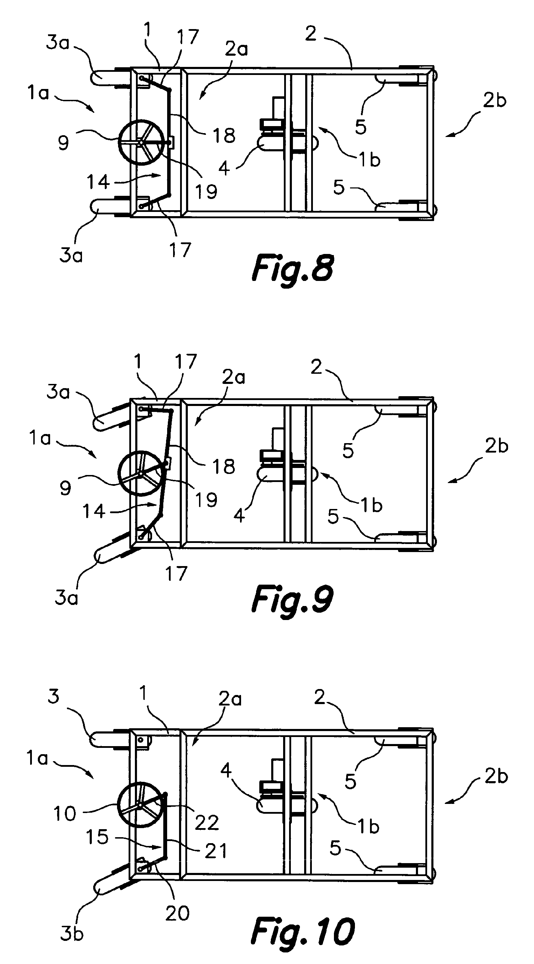

Thus, Fig. 8 shows an alternative embodiment example, similar to that described in relation to Figs. 1 to 4, except that the two first steerable wheels 3 are controllable steerable wheels 3a and the vehicle includes a steering device 9, such as a steering wheel or handlebars, coupled to some means of transmission 14, configured and arranged to simultaneously govern the orientation of the said controllable steerable wheels 3a, while the second steerable wheels 5 are independent self-steering wheels. The mentioned means of transmission 14 consist of, in this example, some levers 17 associated with the rotating controllable steerable wheels 3a and articulated with a transversal bar 18 to form an articulated quadrilateral coupled, for example, by another lever 19, to a steering wheel 9 or handlebar shaft. The mentioned quadrilateral is not a parallelogram to provide a different deviation to each of the controllable steerable wheels 3a, in order to adapt them to the various radii of curvature of their paths, just as shown in Fig. 9.

In accordance with another alternative embodiment example shown in Fig. 10, only one of the said controllable steerable wheels 3 is a controllable steerable wheel 3b, and the vehicle consists of a steering device 10 coupled to some means of transmission 15, configured and arranged to govern the orientation of the said wheel 3b, while the other first and second steerable wheels 3, 5 are independent self-steering wheels. The cited means of transmission 15 comprise a lever 20 associated with the rotating support of the controllable steerable wheel 3a and articulates with a transversal bar 21 connected, in turn to another lever 22 connected to a steering wheel 9 or handlebar shaft.

Governing a single steerable wheel is sufficient to guide the vehicle. However, for conditions that require very precise guidance, it would be advantageous to incorporate the means of control described in relation to Figs. 8 and 9, or even incorporate some means of control (not shown) in which a steering device is coupled to some means of transmission configured and arranged to simultaneously govern the orientation of the said first steerable wheels as well as the second steerable wheels, so that all the vehicle wheels are controllable steerable wheels.

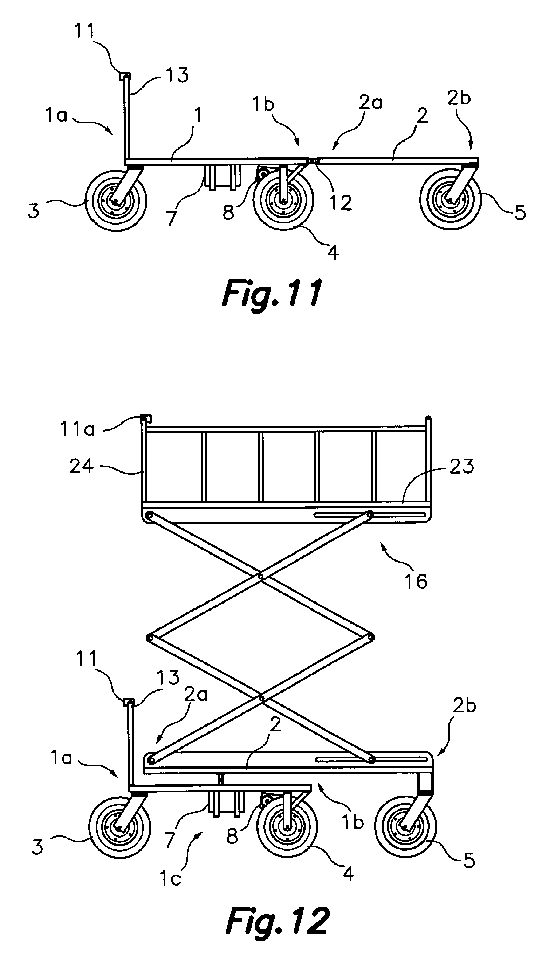

Referring to Fig. 11, which shows another possible embodiment example variant of the vehicle of this invention in which the articulation 12 is located between the said second end 1b of the chassis 1 and said first end 2a of the frame 2, with both the chassis 1 and the frame 2 can be used as platforms for transporting cargo, persons or animals, or for the installation of maintenance structures and/or apparatus.

Finally, Fig. 12 shows an application example of a vehicle in accordance with the embodiment example described in relation to Figs. 1 to 4, which incorporates a lift platform 16, of a conventional type, mounted on the frame 2. This lift platform incorporates some means of drive (not shown) remotely controlled by means of some specific means of control incorporated into, for example, or adjacent to the mentioned control devices 11 for vehicle control and also duplicated in some control devices 11a incorporated into a handle 24 on a raisable platform 23 on the lift platform 16. Of course, a similar lift platform could similarly be installed on a vehicle in accordance with the embodiment example described in relation to Fig. 11.

The previous embodiment examples have a merely illustrative character and an expert in the material would be able to introduce various modifications without leaving the scope of this invention, just as defined by the attached claims. For example, in addition to the articulation 12, which provides a rotating axis that is substantially parallel to the ground S and perpendicular to the vehicle's direction of travel, there could be a second articulation providing rotation in accordance to an axis parallel to the vehicle's direction of travel, which would provide greater adaptability to any irregularities in the ground, but this would not be so advantageous in the case of partially tipping over. In another possible embodiment example, more than two steerable wheels could be included at the first and/or second ends of the chassis and frame respectively.

## Claims

1. An articulated vehicle being **characterised in that** it comprises:
a chassis (1) having a first end (1a) having at least two first and separate, independent, castoring, rolling members (3) fitted to it, and a second end (1b) having a fixedly oriented rolling member (4) fitted to it, this latter rolling member being arranged in the vehicle's travelling direction; and
a frame (2) having a first end (2a) or a region being located in the vicinity of this latter, said end or region being linked to said chassis (1) by means of at least one articulation (12) providing a swivelling axis being substantially parallel to a ground (S) and perpendicular to the vehicle's travelling direction, and a second end (2b) having at least two first and separate, independent, castoring, rolling members (5) fitted to it, said second end (2b) of the frame (2) being distal from the aforementioned first end (1 a) of the chassis (1);
said fixedly oriented rolling member (4) having a rolling surface being adapted to provide a high adhesion in relation to the conditions of said ground (S) for which the vehicle is intended.

2. A vehicle as claimed in claim 1, **characterised in that** said fixedly oriented rolling member (4) is a driving rolling member, a driving motor (6) being operatively arranged to drive said driving rolling member (4).

3. A vehicle as claimed in claim 2, **characterised in that** it includes a battery (7) connected and arranged to supply power to the driving motor (6).

4. A vehicle as claimed in claim 2, **characterised in that** it includes control members (11) connected and arranged for remotely controlling the driving motor (6).

5. A vehicle as claimed in claim 4, **characterised in that** said control meambers (11) comprise means for selectively controlling several functions, among which all or some of the following are included: start / stop; forward /backward motion; speed; emergency stop.

6. A vehicle as claimed in claim 5, **characterised in that** said driving motor (6) is an electric motor.

7. A vehicle as claimed in any of the foregoing claims, **characterised in that** said articulation (12) is located at an intermediary region (1c) between said first and second ends (1a, 1b) of the chassis (1) and a portion of said frame (2) being adjacent to the first end (2a) substantially covers the whole chassis (1), the frame (2) being fit to act as a platform for the transportation of a load, persons or animals or for having handling arrangements and/or units fitted to it, said articulation (12) being arranged in such a way that it maintains the chassis (1) and the frame (2) separated by a given distance at the location where said articulation is arranged.

8. A vehicle as claimed in any of the foregoing claims, **characterised in that** said articulation (12) is located between said second end (1 b) of the chassis (1) and said first end (2a) of the frame (2), both the chassis (1) and the frame (2) being fit to act as platforms for the transportation of a load, persons or animals or for having handling arrangements and/or units fitted to them.

9. A vehicle as claimed in claim 5, **characterised in that** said driving motor (6) is mounted on the chassis (1).

10. A vehicle as claimed in claim 8, **characterised in that** said driving motor (6) is connected to the driving rolling member (4) by means of a motion drive (8).

11. A vehicle as claimed in claim 10, **characterised in that** said motion drive (8) includes one or more reduction stages.

12. A vehicle as claimed in claim 10, **characterised in that** said driving motor (6) and said motion drive (8) are located adjacent to the driving rolling member (4).

13. A vehicle as claimed in claim 8, **characterised in that** it includes at least a battery (7) being fitted to the chassis (1) or frame (2) and being connected to supply electric power to the driving motor (6).

14. A vehicle as claimed in claim 13, **characterised in that** said battery (7) is installed in such a position that at least one portion of the weight of the battery (7) is exerted on the fixedly oriented rolling member (4).

15. A vehicle as claimed in claim 13, **characterised in that** said battery (7) is rechargeable.

16. A vehicle as claimed in claim 13, **characterised in that** it comprises an electrical connection circuit between the battery (7) and the driving motor (6), wherein said control means (11) are included.

17. A vehicle as claimed in claim 1 or 2, **characterised in that** it comprises a braking means being associated to said fixedly oriented rolling member (4), and a means for selectively actuating said braking means.

18. A vehicle as claimed in claim 1 or 2, **characterised in that** said braking means comprise friction braking members being associated to said fixedly oriented rolling member (4), and a means for selectively actuating said friction braking members.

19. A vehicle as claimed in claim 17 when dependent on claim 2, **characterised in that** said braking means are provided by said driving motor (6).

20. A vehicle as claimed in claim 1, **characterised in that** said fixedly oriented rolling member (4) is a wheel being provided with a tread having gripping lugs.

21. A vehicle as claimed in claim 20, **characterised in that** said tread forms part of a pneumatic tyre.

22. A vehicle as claimed in claim 1, **characterised in that** said fixedly oriented rolling member (4) is arranged with respect to the vehicle's travelling direction at an middle position in the chassis (1) in a transversal direction and at an intermediary position between the first and second rolling members (3, 5) in the longitudinal direction.

23. A vehicle as claimed in claim 1, **characterised in that** said first and second rolling members (3, 5) are independent, castoring, rolling members.

24. A vehicle as claimed in claim 1, **characterised in that** one of said first rolling members (3) is a control-guided, castoring, rolling member (3b), and the vehicle comprises a steering device (10) fitted to means of transmission (14) which is configured and arranged for controlling the orientation of said control-guided, castoring, rolling member (3b), whereas the remaining first and second rolling members (3, 5) are independent, castoring, rolling members.

25. A vehicle as claimed in claim 1, **characterised in that** said first rolling members (3) are control-guided, castoring, rolling members (3a), and the vehicle comprises a steering device (9) fitted to means of transmission (14) which is configured and arranged for simultaneously controlling the orientation of said control-guided, castoring, rolling members (3a), whereas the second rolling members (5) are independent, castoring, rolling members.

26. A vehicle as claimed in claim 1, **characterised in that** both the first rolling members and the second rolling members are control-guided, castoring, rolling members, and the vehicle comprises a steering device fitted to means of transmission which is configured and arranged for simultaneously controlling the orientation of all the control-guided, castoring, rolling members.

27. A vehicle as claimed in claim 1, **characterised in that** it comprises a raising platform (16) mounted on the frame (2).

28. A vehicle as claimed in claim 1, **characterised in that** it comprises a handgrip (13) at least at the first end (1a) of the chassis (1).
